# EUROPEAN PATENT SPECIFICATION

(11) **EP 4 618 443 B1**
(45) Date of publication and mention of the grant of the patent: **16.09.2026**
(21) Application number: 25163618.9
(22) Date of filing: 13.03.2025
(51) Int. Cl.: H04B 7/185, H04H 20/74

(54) **TRANSMITTER SYSTEM FOR SATELLITE COMMUNICATION**
SENDESYSTEM FÜR SATELLITENKOMMUNIKATION
SYSTÈME D'ÉMISSION POUR COMMUNICATION PAR SATELLITE

(30) Priority: 13.03.2024 US 202463564587 P
(43) Date of publication of application: 17.09.2025
(73) Proprietor: ST Engineering iDirect (Europe) Cy NV, 9100 Sint-Niklaas (BE)
(72) Inventor: DUYCK, Dieter, 9100 Sint-Niklaas (BE); VAN WONTERGHEM, Johannes, 9880 Aalter (BE); DUPUY, Arthur, 79400 Saint Maixent l'Ecole (FR); DELBEKE, Philippe, 2610 Wilrijk (BE)
(74) Representative: Winger

(56) References cited:
- US-A1- 2021 083 762
- CHRISTIAN ROHDE ET AL: "Super-framing: a powerful physical layer frame structure for next generation satellite broadband systems : DVB-S2X super-framing", INTERNATIONAL JOURNAL OF SATELLIT COMMUNICATIONS AND NETWORKING, vol. 34, no. 3, 1 May 2016 (2016-05-01), GB, pages 413 - 438, XP055634047, ISSN: 1542-0973, DOI: 10.1002/sat.1153

## Description

### Field of the invention

The present invention is generally related to the field of satellite communication systems.

### Background of the invention

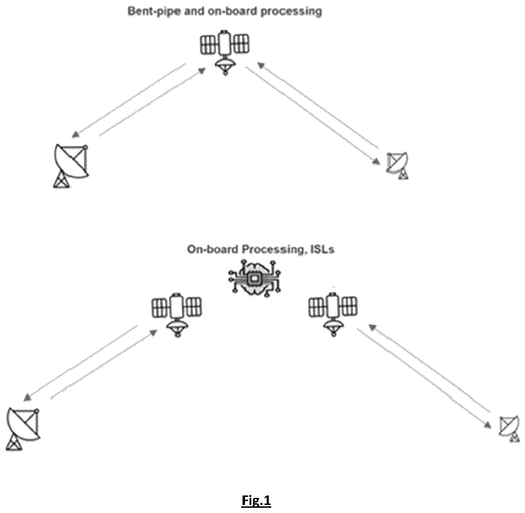

A typical realization of a satellite communication network is based on a star network in which a transmitter at the gateway transmits in the so-called forward (FWD) link via the satellite to one or more terminals. In case of interactive communication, the terminals transmit back in the so-called return (RTN) link via the satellite towards a receiver at the gateway. Without being exhaustive, Fig.1 visualizes by way of example two possible use cases. The shown use cases are point-to-point links and a link from a gateway over a feeder link to a regenerative satellite that demodulates and decodes the signal, after which it is sent to one or more other satellites over inter-satellite links (ISLs). Next, the signal is modulated for the user links to one or more terminals. Said user links can for example be 5G-NR or DVB-RCS2 based. For the point-to-point links or the feeder links, a waveform such as DVB-S2X (see ETSI EN 302 307-2 and ETSI TR 102 376-2) is well suited. Modifications of 5G-NR, DVB-RCS2, or DVB-S2X are possible to address certain requirements, such as security needs.

In general, coded communications are considered in this disclosure, such as in DVB-S2X or DVB-RCS2 or similar standards or modifications thereof. For instance, in DVB-S2X, forward error correcting (FEC) codewords have a fixed coded length of 64800 (normal) or 16200 (short) bits. Codewords result from encoding a sequence of information bits, which is referred to as a set of encapsulated frames. In DVB-S2X, these encapsulated frames are denoted baseband frames. The coded bits in a codeword are then mapped to a sequence of I/Q symbols according to a predefined M-ary constellation, mapping m bits to a single I/Q symbol, where m is the binary logarithm of M, denoted log₂(M). The sequence of I/Q symbols mapped from a codeword is in this disclosure denoted as an XFEC frame, matching the notation in DVB-S2X, or a frame of encoded and modulated symbols. In the-is disclosure also variations with other code lengths can be applied.

To allow receivers to lock on the waveform, in each of these standards or modified versions, a preamble is prepended to such XFEC frames. Receivers know this preamble and can search for it by means of correlations or variations thereof (coherent of non-coherent).

In DVB-S2X, multiple framing types exist, (1) only PL frames (physical layer frames) or (2) using PL frames and super-frames (DVB-S2X Annex E). The preamble in the PL Frames is denoted as a PL header (comprising a known "Start Of Frame" (SOF) sequence and a PLS sequence which comprises information needed to demodulate and decode the payload, such as the type of modulation and coding used). In case of using PL frames and superframes, next to PL headers, also a superframe preamble (comprising a Start Of Superframe (SOSF) sequence) is inserted in the stream of I/Q symbols and used for synchronization. Using superframes can serve many purposes, such as allowing communication to terminals in very low SNR (VLSNR) conditions, allowing an elegant estimation of adjacent channel interference, allowing precoding, beam hopping or slotted communication in general.

Next to the SOSF field, the superframe preamble also contains a superframe format indicator (SFFI), and optionally other elements (such as a superframe header (SFH) in format 5, or an EHF and PLI in format 6). Thus, the superframe preamble contains a large "known" sequence (although depending on configuration), that can be used to acquire (lock on) the waveform.

Both when using super-frame or not, pilot symbols can be inserted as in the stream of I/Q symbols, e.g. for allowing phase and frequency offset tracking at the receiver side.

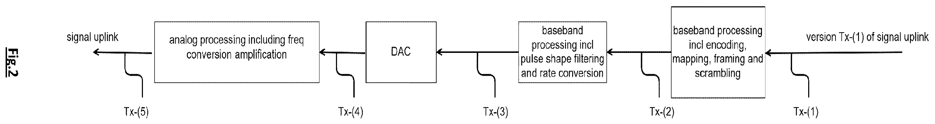

Such waveforms starting from large codewords are proven to be very spectrally efficient (approaching the Shannon capacity). In this disclosure waveforms are considered comprising coded frames mapped to I/Q symbols using a predefined constellation, a preamble and, optionally, pilot symbols, for synchronization. The preamble length is denoted p. An example of such a waveform generation as described above is given in Fig.2.

Direct Sequency Spread Spectrum (DSSS) is a well-known spreading technique to hide communication from adversaries. DSSS spreading is a useful technique that allows, while increasing the occupied bandwidth but maintaining the same power, achieving one or more of three goals:
- hiding a useful signal by lowering the PSD (possibly below the noise or below another signal)
- increase jamming resilience
- superposing multiple spread waveforms that can be distinguished by means of orthogonal spreading codes

The k-th I/Q symbol of a carrier before or after symbol scrambling (denoted PL scrambling in DVB-S2X) is denoted by a(k). After spreading with a spreading sequence, one gets the chips s(n), where $s \left(k*S_F+l\right) = a \left(k\right) * ss \left(k, l\right)$ where ss(k,l) is the I^{th} scalar of the spreading sequence used for symbol k of said carrier, and S_F is the spreading factor. As mentioned above, spreading typically occurs after inserting the known symbols (preamble and pilot symbols). It can be performed before or after scrambling. One can also choose to drop the scrambling in the case of spreading. The spreading itself can also be seen as a scrambling operation.

For example, consider a spreading factor S_F of 100, i.e., 20 dB, and modcods with a quasi-error-free (QEF) threshold of -8 dB. In addition, consider a desired link margin of, say, 5 dB to keep some margin for channel fading. Hence, the SNR after spreading can be as low as -23 dB. After despreading, the SNR becomes -3 dB, which still has 5 dB link margin before reaching the QEF threshold of -8 dB. Another example is to use a modcod with a QEF threshold of -2 dB (e.g. QPSK 1/4, without using superframes or VLSNR modcods), in which case the SNR after spreading can be as low as -18 dB for S_F = 20 dB and a link margin of 5 dB.

While DSSS spreading is a well-known solution to hide a carrier under the noise, there are techniques available to retrieve the spreading sequence by averaging out the noise. Indeed, for the preamble symbols (e.g. the SOF or the SOSF and SFFI for DVB-S2X) and for a fixed spreading sequence, the first S_F * p chips in expression (1) are the same every frame, for I = 0, ..., S_F-1 and k = 0, .., p-1, where p is the length of the fixed preamble per frame. This is because {a(k), k = 0, ..., S_F-1} is the same preamble every frame, and because a fixed chip sequence must be used to allow a receiver to lock on the waveform.

Hence, by means of pattern recognition or similar techniques, this repeating pattern can ultimately be discovered (using averaging techniques). Assume by way of example that an SNR of 10 dB is required for a detector to retrieve the spreading sequence being used. Hence, for an effective channel SNR of -23 dB (i.e., the spread carrier has a PSD 23 dB under the noise), it is sufficient to average out 33 dB or roughly 2000 frames. For high spreading factors and thus low unspread symbol rates, e.g. 200 kbaud, there may be as few as 4 frames per seconds. Hence, it would take 500 seconds to average out the noise.

In TRANSEC (Transmission Security) communication, the spreading sequence or scrambling sequence can be varied each frame, provided that the transmitter and receiver dispose of the same cryptographic module to look up the scrambling and/or spreading sequence provided a secret key and a hop-ID (identifying the frame). However, this requires a complex and sometimes very long synchronization process to retrieve the hop-ID. In addition, it also requires a more complex receiver disposing of such a cryptographic module, protected against physical tampering. In fact, in most nowadays systems, the spreading or scrambling sequences are not varied. Hence, there are certain and frequent circumstances where the spreading or scrambling sequence cannot be varied and thus, as explained above, the spreading sequence being used can be retrieved. Consequently, there is a need for another solution to hide the communication (e.g. to avoid jamming, eavesdropping or spoofing the communication). Even with TRANSEC communications, the hop-ID mentioned above is sometimes signalled through a signalling waveform to make the synchronization process retrieve the hop-ID faster. That signalling waveform itself is then not taking advantage of varying scrambling or spreading sequences and thus, as explained above, the spreading sequence being used can be retrieved and there is a need for another solution to hide the signalling waveform.

In addition, some adversaries may dispose of a satellite and/or a ground station with a very large antenna. As a result, they experience much less uplink and/or downlink noise than the legitimate receiver (hence having a higher SNR than -23 dB as used in the illustrative example above), which can also lead to a faster leaking of the used spreading sequences.

Hence, there is a need for transmission systems capable of better hiding the signalling waveform. An example of prior art is the article by CHRISTIAN ROHDE ET AL: "Super-framing: a powerful physical layer frame structure for next generation satellite broadband systems : DVB-S2X super-framing",INTERNATIONAL JOURNAL OF SATELLITE COMMUNICATIONS AND NETWORKING, vol. 34, no. 3,(2016-05-01).

### Summary of the invention

It is an object of embodiments of the present invention to provide for a transmission system that offers additional tools to hide the emitted waveform for adversaries.

The above objective is accomplished by the solution according to the present invention.

In a first aspect the invention relates to a transmission system arranged for generating data traffic to be transmitted to one or more earth station receivers of a satellite communication system. The transmission system comprises :
- encoding and modulation means for encoding and mapping a plurality of baseband frames of information bits belonging to said data traffic, each baseband frame associated with a modulation and coding type, to a plurality of frames of encoded and modulated symbols,
- generator means to generate one or more values to determine a superframe length,
- framing means arranged for inserting synchronization symbols and preambles into frames of the plurality of frames of encoded and modulated symbols, so obtaining a plurality of superframes, each preamble indicating the start of a superframe,
- spreading means arranged to receive the plurality of superframes or a version of said plurality, and to spread each symbol in that plurality of superframes or the version thereof with a spreading sequence to a chip sequence, so obtaining a plurality of spread superframes,
wherein the one or more values generated in the generator means determine for a current superframe a frame length different from the frame length of the preceding superframe.

The proposed solution indeed allows making it more difficult for an eavesdropper to derive information from the transmitted signal. In this invention this is achieved by varying the distance between subsequent preambles in an unpredictable way. The transmission system thereto comprises generator means that generate one or more values to determine a superframe length. It is to be noted that the realization of the superframe length variations is performed in various ways different from what is described in the DVB-S2X standard. Just to name one difference, in the present invention the spreading means also play an important role in obtaining the resulting waveform signal to be transmitted. Also the generator means determining the superframe length just for the sake to vary the distance between preambles are not described in the standard. More details are provided later in this description. Also various ways to vary the number of symbols between preambles of consecutive superframes will be described. Some of those ways are not supported by the DVB-S2X standard.

In a preferred embodiment the transmission system comprises scrambling means and wherein the version of said plurality received by the spreading means comprises scrambled superframes.

In another preferred embodiment the transmission system comprises scrambling means arranged to scramble said plurality of spread superframes.

In advantageous embodiments the synchronization symbols comprise pilot symbols and/or physical layer header symbols.

In some embodiments the framing means is arranged to convert the plurality of frames of encoded and modulated symbols into a plurality of capacity units, each capacity unit corresponding to a predetermined number of symbols, and the framing means are further arranged to insert into the plurality of capacity units, per superframe, a preamble and, optionally, superframe pilots and a postamble.

The generator means is in such embodiments preferably arranged to generate a value representing the number of capacity units in a superframe. Advantageously, the capacity unit comprises 90 symbols or a multiple of 90 symbols.

In some embodiments the generator means are arranged to generate a value representing the postamble length.

Preferably the number of capacity units in a superframe and/or said postamble length is different than the number for the preceding superframe.

In one embodiment the transmission system is further arranged to insert at least one dummy frame of type B as defined in DVB-S2X after a last frame of encoded and modulated symbols in a superframe, wherein the generator means are arranged to determine a value representing a length of the dummy frame of type B.

In another embodiment the transmission system further comprises a superframe placer hosting the generator means.

In a preferred embodiment the transmission system comprises baseband shaping and quadrature modulation means arranged for receiving the spread superframe or the scrambled spread superframe and for modulating symbols of the superframe on a waveform at a chip rate, thereby obtaining a signal to be transmitted.

In advantageous embodiments the transmission system is further arranged to add a further signal to the signal to be transmitted, said further signal occupying at least a same frequency range in the frequency domain as the signal to be transmitted and the further signal having a higher power spectral density than the signal to be transmitted.

In some embodiments the further signal is a noise signal. In other embodiments the said further signal is a carrier signal, preferably a TRANSEC carrier signal.

In preferred embodiments the spreading sequence is reconfigurable. The spreading sequence may be reconfigured daily or weekly.

In one embodiment the generator means are arranged to generate said one or more values per superframe, said one or values being different from superframe to superframe.

In a preferred embodiment the modulation is a QPSK modulation. Even when the modulation order is always QPSK modulation and one does not need to fit in a particular hopping slot as for beam hopping, the generator means will still keep generating new values leading to new superframe lengths.

For purposes of summarizing the invention and the advantages achieved over the prior art, certain objects and advantages of the invention have been described herein above. Of course, it is to be understood that not necessarily all such objects or advantages may be achieved in accordance with any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

The above and other aspects of the invention will be apparent from and elucidated with reference to the embodiment(s) described hereinafter.

### Brief description of the drawings

The invention will now be described further, by way of example, with reference to the accompanying drawings, wherein like reference numerals refer to like elements in the various figures.
Fig.1 illustrates two exemplary use cases of a satellite communication network with interactive communication.
Fig.2 illustrates an example of a waveform generation.
Fig.3 illustrates a superframe structure.
Fig.4 illustrates a superframe structure.
Fig.5 illustrates superframe structure including a variable length postamble as shown in ETSI EN 302 307-2 V1.2.1.
Fig.6 illustrates a superframe structure.
Fig.7 illustrates a superframe structure.
Fig.8 illustrates some possible locations for a superframe placer. In the scheme at the bottom of the figure the framing means comprise the superframe placer.
Fig.9 illustrates a spectrum obtained at the output of the transmission system according to the invention.
Fig.10 illustrates a block diagram of the transmitter system according to the invention.

### Detailed description of illustrative embodiments

The present invention will be described with respect to particular embodiments and with reference to certain drawings but the invention is not limited thereto but only by the claims.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art.

It should be noted that the use of particular terminology when describing certain features or aspects of the invention should not be taken to imply that the terminology is being redefined herein to be restricted to include any specific characteristics of the features or aspects of the invention with which that terminology is associated.

In the description provided herein, numerous specific details are set forth. However, it is understood that embodiments of the invention may be practiced without these specific details. In other instances, well-known methods, structures and techniques have not been shown in detail in order not to obscure an understanding of this description.

Below the invention is explained in detail, often using DVB-S2X as an example. The invention is however in no way limited thereto : for example also DVB-RCS2 or proprietary return link technologies using pulse-shape filtered are possible alternatives.

The encoding and modulation means receive encapsulated frames or baseband frames comprising information bits of the data traffic to be transmitted and generate frames of encoded and modulated symbols. For instance, the encapsulated frames or baseband frames comprise IP packets prepended by a header to indicate which modulation and coding is to be used. The modulation is also referred to as mapping. In DVB-S2X, the modulation (or mapping) and coding type is referred to as MODCOD. The modulation and coding type is also denoted modcod in the following, even though, as already mentioned, the present invention is not limited to DVB-S2X.

In order to avoid that an adversary can average out the noise, the present invention proposes to vary the distance between subsequent preambles in an unpredictable way. To realize this, the concept of superframe is used in most embodiments of the invention.

Some existing concepts of superframes in DVB-S2X are briefly revisited now.

Recent evolutions in the DVB-S2X standard have revealed new features or capabilities like burst acquisition (e.g., for beam hopping or precoding, from a terminal point of view, only a fraction in time of the FWD link signal has a good SNR and should be received by doing a burst acquisition on that fraction in time), so-called low power receivers (relevant for Internet-of-Things applications for instance; also exploiting burst acquisition to only demodulate the frames it needs, so saving power), and VLSNR reception (i.e., terminals experiencing a very low (VL) signal to noise ratio (SNR) can still demodulate and decode information).

More specifically, in ETSI EN 302 307-2 (DVB-S2X) and ETSI TR 102 376-2 (guidelines DVB-S2X), e.g., version 1.2.1, the concept of superframes (SF) is introduced, coming in different superframe formats (SFF) targeted to different applications, but with overarching principles and signalling elements for receiver addressing and synchronization. The SFs in those standards transport variable length (more specifically, the length of the PL frames depends on the modulation order) physical layer frames (PL frames) as defined originally in ETSI EN 302 307. This means strings of encoded and modulated symbols (PL frames) are obtained after mapping coded bits from one codeword (64800 or 16200 coded bits obtained after encoding a so-called baseband frame of information bits) to data symbols multiplexed with known symbols and a (short) preamble (including known symbols and signalling) denoted a PL header.

It was already mentioned in the background section that the superframes in ETSI EN 302 307-2 and ETSI TR 102 376-2 have a start-of-superframe (SOSF) field, which is used in the terminal receiver to detect the start of a superframe. Next to the SOSF field, the superframe preamble also contains a superframe format indicator (SFFI), and optionally other elements (such as a superframe header (SFH) in format 5, or an EHF and PLI in format 6). Thus, the superframe preamble contains a large "known" sequence (although depending on configuration), that can be used to acquire (lock on) the waveform.

In ETSI EN 302 307-2 V1.2.1 and ETSI TR 102 376-2 V1.2.1 the SOSF and SF-aligned pilot fields are taken from a set of near-orthogonal symbol sequences, known as Walsh-Hadamard (WH) codes optionally plus some padding. There are 256 possible quasi-orthogonal SOSF fields, determined by an SOSF-index (corresponding to a row in a 256-by-256 WH matrix). The per PL frame physical layer scrambling is not present anymore and organized on a superframe level, denoted two-way scrambling. In two-way scrambling, the SOSF and SF-aligned pilot symbols are scrambled with the reference data scrambler and all other symbols are scrambled with the payload data scrambler.

In SFF5 (superframe format 5) and SFF6 (superframe format 6), the SOSF and SFFI are followed by a superframe header (SFH, equal to Extended Header Field (EHF) and Protection Level Indication field (PLI) for format 6, and determined by the PLI, pilots on/off, pointer to the first physical layer header (PLH) and two user bits or reserved bits for format 5). SFF5 allows for fragmentation of a physical layer frame over different superframes. According to the standard and the guidelines, SFF5 explicitly targets beam hopping (BH) applications where constraints on the superframe length may arise. Allowing fragmentation of a PL frame over more than one superframe avoids the need for padding when requiring a particular superframe length to be obtained, thus decreasing the overhead. Superframes thus comprise a superframe preamble (comprising at least an SOSF and SFFI sequence), coded symbols and, optionally, pilot symbols. Superframes can also optionally comprise a postamble, including dummy switching symbols. Typically, there is also one or more PLH in a superframe. The DVB-S2X standard mentions the latter is not required (as PL frames can also be fragmented across more than two superframes) but it is recommended for complexity reasons. The optional pilot symbols and one or more PL headers are denoted as synchronization symbols in this description. The superframe preamble is denoted as the preamble. The optional postamble is denoted as postamble. Typically, in a transmission system, first PL frames are made and subsequently, the I/Q symbols from the PL frames are put in superframes. In one embodiment the PL frames (also denoted as frames of encoded and modulated symbols) are converted into a plurality of capacity units and said framing means are arranged to insert into said plurality of capacity units a preamble and, optionally, superframe pilots and a postamble, per superframe. A PL frame can be fragmented across more than one superframe. More specifically, a first part can be part of a first superframe and a second part can be part of a second superframe.

The DVB-S2X standard elaborates on the length of the superframes in the following way. Most of the superframe formats come with a fixed superframe length of 612 540 symbols. In an amendment of the standard in 2021, ETSI EN 302 307-2 V1.3.1, formats 5, 6 and 7 were introduced to specifically address the application of beam hopping. In format 5, the length is a multiple of 1476 symbols to maintain the regularity of the pilot grid (except for the last superframe in a dwell that can have a different length), in format 6 and 7, it ends at the end of a Capacity Unit (CU) (a CU is 90 symbols long in DVB-S2X) or after a pilot block (36 symbols). In format 5, a PL frame can be fragmented over two superframes or a type B dummy frame can be shortened, to adhere to the constraint of SFL = n × 1476. In formats 6 and 7, a PL frame cannot be fragmented.

In the present invention, one deviates from the DVB-S2X specification in multiple ways. First, variable length superframes are used for applications other than beam hopping. The constraints on the superframe lengths imposed in the DVB-S2X standard are not respected in this invention. Superframe length variations are realized in a way not described in the standard. The invention is essentially combined with spreading, which is not mentioned in DVB-S2X. The code lengths used in DVB-S2X are also not essential to explain the present invention.

The framing means considered in this invention thus generate physical layer frames (PL frames) and subsequently superframes, more specifically, frames comprising a preamble and, optionally, pilot symbols. These superframes are then spread and, optionally, scrambled, before being shaped by a pulse shape filter.

Fragmentation of PL frames over more than one superframe is a feature that optionally can be reused in this invention. This makes it possible to have superframe lengths that do not depend on the length of the PL frame. In addition, the PLH starts at other distances from the superframe preamble, which makes that it is scrambled differently than in the previous superframe, so that noise averaging does not help to retrieve the PLH.

A linear channel is considered for simplicity (hence, no non-linear amplification). Use of the transmit system of the invention is however not limited to linear channels. A complex-valued baseband equivalent channel is considered : $y _ sat = s _ gateway + n _ u and y _ ground = y _ sat + n _ d ,$ where s_gateway is the transmit waveform emitted from the gateway, here normalized with mean 0 and power 1, and n_u and n_d denote the uplink and downlink noise, respectively, typically circularly symmetric Gaussian with mean 0 and variance 1/SNR_u and 1/SNR_d, respectively, with SNR_u and SNR_d being the signal-to-noise ratio (SNR) in the uplink (towards satellite) and downlink (towards ground), respectively. y_sat represents the waveform at the satellite. In general y_sat is not brought to baseband there, in which case it is just an intermediate variable to be substituted in the second equation. y_ground is the baseband signal in the receiver on the ground and n_d the downlink noise. In the case of a feeder link to a regenerative satellite, y_sat is not just an intermediate variable but a true signal with meaning as it is demodulated and decoded on-board the satellite.

An adversary that is eavesdropping the link can eavesdrop y_sat (and demodulate it on-board or relay it to the ground) using its own satellite or y_ground from the ground. In the case of eavesdropping y_sat, the eavesdropper typically has a different n_u than in the legitimate link, e.g. with a much lower variance by using a larger antenna. In the case of eavesdropping y_ground, the eavesdropper typically has a different n_d than in the legitimate link, e.g. with a much lower variance by using a larger antenna. The solution according to the invention allows superframe lengths that are no multiple of a CU, in contrast to the DVB-S2X standard.

Several embodiments are now described to vary the number of symbols between preambles of consecutive superframes to solve the technical problem at hand. In general, for all superframe structures according to the invention illustrated further, generator means comprised in the transmission system generate an appropriate (e.g., long enough but not too long) but unpredictable superframe length. More details are provided further in the description. Alternatively, the generator means generate one or more values based on which the superframe length can be determined. The framing means then insert a new preamble to realize this superframe length. Some possible embodiments are described below. In a preferred embodiment, the generator means generate a new superframe length per superframe. But it can also be done more occasionally, as long as it is done frequently enough to avoid that noise averaging reveal the superframe preamble which is always scrambled in the same way.

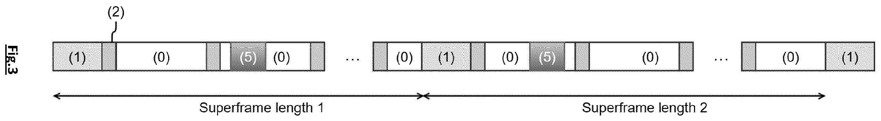

A first superframe structure is illustrated in Fig.3, where (0) refers to payload symbols, (1) to the superframe preamble (comprising SOSF, SFFI, SFH), (2) to regular SF pilot symbols (which are optional) and (5) to a PLH. For this superframe structure, a receiver is assumed that can burst acquire a preamble such as the superframe preamble standardized in ETSI EN 302 307-2 V1.2.1. Any length can be used for the super frame, also lengths that are officially not supported by the standard. The invention is not limited to DVB-S2X. More specifically, after detecting a superframe preamble, the receiver starts processing (a fragmented part of) the one or more physical layer frames in the superframe, but, in parallel, it starts looking for another preamble. Once it finds a new preamble, it knows the current superframe has ended and the remainder of the physical frame that it was processing will follow after the current preamble. For superframe lengths determined by the generator means that are not a multiple of a CU, the next PLH thus appears at a symbol distance from the start of the next superframe, where said symbol distance in general is no multiple of a CU. More specifically, a PL frame typically has a length equal to a multiple of a CU, but if the superframe length is no multiple of a CU, the first part of the PL frame in the first frame has a length that is no multiple of a CU and thus the second part till the next PLH does not either have a length being a multiple of a CU. Another variation is that the FEC frames have a different length than in the DVB-S2X standard, resulting in PL frames that in general are no multiple of a CU. Thus, even for superframe lengths that are a multiple of a CU, equally to the previous case, the next PLH thus appears at a symbol distance from the start of the next superframe, where the symbol distance in general is thus not a multiple of a CU.

In DVB-S2X, the SFH is an encoded and modulated sequence generated from 16 information bits, comprising an 11-bit pointer to the first complete PLH (counting in CUs). This thus needs to be adjusted when the first complete PLH is at a symbol distance from the start that differs from a multiple of CUs. Multiple solutions are available. First, in case of only using PLI 2, PL headers are 900 symbols long and every receiver that can detect a superframe preamble (which works roughly for SNRs down to -10 dB for typical channel effects (e.g. Doppler effects in LEO environments) can decode any PLH. As such, any receiver can determine how many symbols are left in the currently fragmented PL frame when starting a new superframe and thus a pointer to the next PLH is not needed. The pointer foreseen in the standard is only needed for receivers in very low SNR conditions that are not able to decode all PL headers. E.g. for a PLI of 2, PL headers can be decoded for SNRs down to -11 dB. For a PLI of 1, this only works for SNRs down to -5 dB; for a PLI 0, this only works for SNRs down to -2 dB; and for a PLI 3, this only works for SNRs down to 5 dB. Next to the 11 bit pointer, the 16 information bits conveyed by the SFH also comprise two bits to convey the PLI, a pilot on/off bit and two reserved bits. Thus, when only using a PLI of 2, a pointer to the first PLH is not needed and also PLI signalling is not needed (as it is fixed). Thus, the SFH can be made shorter (as it conveys less unknown bits) or more robust. In an embodiment, pilots are always on and the two reserved bits are also not used and the SFH can be a fixed sequence (e.g. corresponding to that for an 11 bit pointer of all zeros as an example, for PLI 2, for pilots on and reserved bits "00"). Another solution is to extend the bit size of the pointer to more bits to allow pointing to the first complete PLH counting in symbols instead of in CUs.

A second embodiment uses the same superframe structure but the transmission system signals the superframe length to the receiver. This simplifies the receiver operation a bit as it can limit the search for another preamble to a limited time interval. The signalling must be decoded while the frame synchronization in the receiver occurs before the decoding, so the implementation of this embodiment is possible but somewhat more complex.

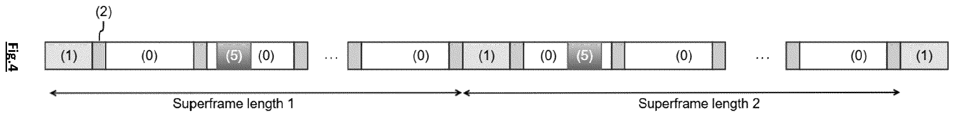

A third embodiment is to only allow the transmission system to start a new superframe after a superframe pilot segment, which also simplifies the receiver operation a bit for the same reason as above (looking for another preamble can be limited to predefined time intervals). A superframe structure according to this embodiment is illustrated in Fig.4. More specifically, a more low-cost type of receiver uses a continuous type of demodulator which needs several superframes to lock on the carrier and needs to know more information on the position of the superframe to obtain a sufficiently low probability of miss and probability of false detection. For instance, it needs to know that the superframe length is a multiple of 16 Capacity Units (CUs) (in DVB-S2X, a CU is 90 symbols long and 16 CUs is 1476 symbols long as it also includes a pilot segment of 36 symbols). A solution can be thus to limit the possible lengths of the superframe to a multiple of a certain basic amount (e.g., a multiple of 16 CUs (including a pilot segment of 36 symbols), so 1476 symbols; or a multiple of 15 CUs or another amount). This reduces the probability of falsely detecting a start of superframe on all other positions. E.g., in the case of 16 CUs = 1476 symbols, it reduces the probability of false detection by a factor 1476. Obviously, the length of the CUs used in DVB-S2X, i.e., 90 symbols, can be varied to another length. Equally, other FECs can be used with other FEC lengths. So, the CU length of 90 symbols is certainly not limiting the invention and that CU length can as well be changed to another value, such as 80 or 70 for instance. The superframe length variation is then obtained by letting the generator means generate a different multiple of the basic amount each superframe or more occasionally.

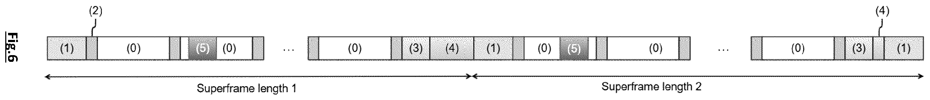

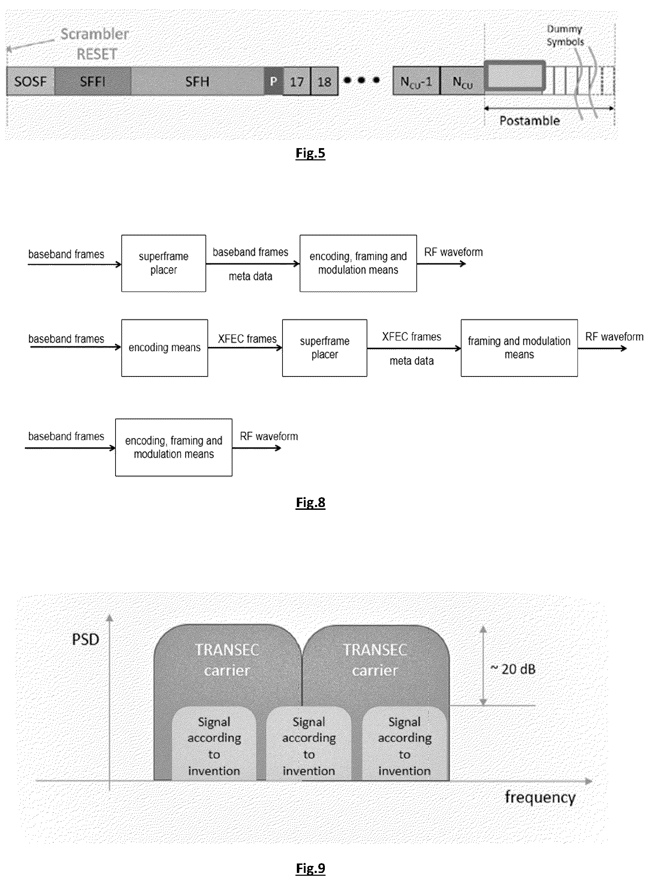

A fourth embodiment is that the transmission system first needs to add a postamble (comprising at least 180 and 900 symbols for PLIs 0 and 2, respectively), as standardized in ETSI EN 302 307-2 V1.3.1 for superframe format 5, before it is allowed starting a new superframe. The postamble was added in DVB-S2X for the application of beam hopping, where a postamble is used to signal to the receiver that the end of a dwell is reached. The first part of the postamble has L symbols, where L is the PLH size of the best protected superframe in the dwell (so 90, 180, 360 or 900 depending on the PLI). The first part of the postamble symbols is typically known and provided in Sec. E.3.7.8 in ETSI EN 302 307-2 V1.3.1. Obviously, the first part of the postamble can be taken different from the standard and kept secret so that it is more difficult for adversaries to locate it. See Fig.5 showing a superframe structure including a variable length postamble as shown in ETSI EN 302 307-2 V1.2.1 Fig. Figure E.14a. In embodiments of this invention, the postamble is used to signal a following new superframe. The transmission system can insert a variable number of dummy switching symbols in the second part of the postamble before the new superframe preamble to make the length between two superframe preambles more random (hence, not dependent on the length of physical layer frames or the duration between pilot segments, or not a multiple of a CU of 90 symbols). A superframe structure according to this embodiment is illustrated in Fig.6, where (3) is the first part of the postamble comprising 900 symbols, for a PLI of 2, and (4) is the second part of the postamble which comprise dummy switching symbols with variable length. A variable superframe length can thus be obtained by letting generator means generate a multiple of a basic amount (occasionally or always changing this multiple ensures that the postamble is scrambled differently making it more difficult for adversaries to locate and retrieve it) and/or generate a length of the dummy switching symbols, each superframe or more occasionally. Worded differently, the generator means determine when a postamble starts and/or how long a postamble is.

While the superframe length does not need to be a multiple of a CU (giving more possible superframe lengths and thus increasing the difficulty for adversaries to retrieve the superframe preamble by averaging noise) according to this embodiment, the number of payload symbols (corresponding to (0) in Fig.6) in a superframe always equals a multiple of a CU. As such, the symbol distance from the start of the new superframe to the first PLH is also a multiple of a CU in the case that the PL frame length is a multiple of a CU. Thus, in that case, the SFH can be kept as standardized, comprising an 11-bit pointer to the first PLH counting in CUs, allowing more reuse from a standard DVB-S2X receiver, which is preferred and advantageous.

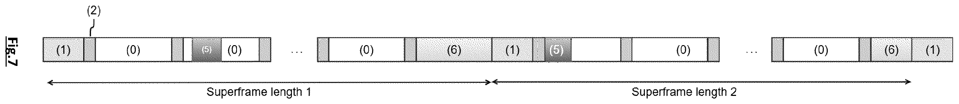

Another method is to use dummy frames of type B. The DVB-S2X standard foresees a dummy frame of type B that can be shortened to be included after the last PL frame in a superframe. The method using dummy frame of type B is good but offers less degrees of freedom than the postamble. A postamble can be inserted within a PL frame as this PL frame can be fragmented across superframes. A dummy frame of type B can only be inserted after a PL frame, which gives less degrees of freedom to end a superframe when desired. E.g., for low symbol rates such as 200 kbaud, a PL frame of 44000 symbols could last for 200 ms, which is a very long time. If one would like to end a superframe earlier, this is not possible with the method of the dummy frame of type B. For higher symbol rates, the dummy type B frame has less disadvantages. The method using dummy frame of type B can also be used with superframe format 6 and does not necessarily require fragmenting PL frames, which can be advantageous. On the other hand, the first PLH always follows the superframe preamble and, optionally, pilot sequence, and is thus always scrambled in the same way. A superframe structure according to this embodiment is illustrated in Fig.7, where (6) is the dummy type B frame with variable length.

The generator means is the entity in the transmission system that orchestrates the superframe length variation, hence indicates when a new superframe preamble needs to be inserted. This can be done in multiple ways. The baseband frames to be encoded do not depend on the way the superframe preamble is inserted. They are encoded to XFEC frames, and a PLH and, optionally, VLSNR pilot symbols, are added. Then, superframe preambles are inserted depending on the decided superframe length. The generator means can thus reside in or communicate with the framing means. But, as explained in EP application with application number EP2023204865, also a superframe placer can coordinate the packing of physical layer frames in superframes with variable length. Hence, the generator means could be in the superframe placer in one embodiment.

As mentioned above, there is ideally one or more PLH in a superframe. This means that the sum of the superframe payload length of any two consecutive superframes should be larger than twice the PL frame length. E.g., if a PL frame of 44000 symbols is used, the sum of the superframe payload length of two consecutive superframes should be at least 88000 symbols long (further incremented with the number of symbols in the preamble and the pilots). A simple way is of course to make the superframe payload length of each superframe at least 44000 symbols long, but there are also other ways. On the other hand, the superframe should not be too long either, e.g. in order to have sufficient fast lock-time on a superframe preamble. The possible lengths should form a sufficiently large set to make brute force attacks assuming lengths difficult. For instance, the length could be varied between 45000 and 55000 symbols. This gives 10000 possible frame lengths which makes brute force attacks very hard.

Next to varying the frame length, the link needs to be filled, definitely in S2X-like scenarios or when having a transponder with automated level control (ALC), requiring a constant power at its input to control the on-board amplifier in an appropriate way.

As explained in EP 4498624, fill frames can be added at several locations, e.g. in the framing means, or in the superframe placer, or even higher up in the layers. The elegance of adding fill frames in the framing means can be highlighted. Consider the embodiment where the framing means autonomously decides when to start a new superframe, e.g. by inserting a variable length postamble and then a new superframe preamble. In the absence of traffic, the framing means can add dummy frames of type B. The standard foresees the truncation of those frames at the end of the superframe, e.g. when inserting a postamble. In another embodiment, as explained in EP 4498624, also the superframe placer can insert dummy frames of type B.

An exemplary block diagram for an embodiment using a superframe placer is shown in Fig.8. As mentioned, in another simpler embodiment, the framing means themselves comprise the generator means, without requiring metadata to decide when a new superframe starts.

Above several ways have been described to obtain variable superframe lengths. As such, an adversary cannot detect patterns because, as it does not know the spreading sequence used, it needs to average out the noise to be able to find recurring patterns. However, this averaging out only works if the recurring patterns are averaged out. If the recurring patterns do not recur on predictable locations, it is not possible to average them out.

In some embodiments, e.g. when inserting a new superframe preamble after a pilot sequence, the recurring preamble is always located somewhere on a grid. Hence, an adversary could average out all locations of the grid. From time to time, a recurring pattern is present on the grid. On the other locations of the grid, other sequences are present, which act like noise in the averaging operation. This "noise contribution" in the averaging situation already significantly lengthens the time needed to average out the patterns, but the averaging may ultimately still succeed. Therefore, it is good practice to change the spreading sequence from time to time, e.g. daily, or weekly. When the legitimate terminal would have a time uncertainty, e.g. due to absence of GNSS, of a few seconds, or 10 or 100 seconds, this would then result in at most an outage of that time uncertainty, but only daily, or weekly. Alternatively, the state machine of the terminal can try the spreading sequence for the next period when it comes close to that next period, one or more minutes before the start of the next period, and it does not manage anymore to lock on the waveform. This could limit the outage time to a very short time.

Various ways have been described above to achieve variable length frames in DVB-S2X, using superframes. Obviously, the invention holds for ways to get variable length frames different from superframes. E.g. regular PL frames could be padded with a variable length as well. Similarly, each PL frame has a preamble and the symbol distance between preambles varies, even for consecutive PL frames of the same modulation order. The padding would then be similar to the above-described embodiment of the dummy type B frame. Fragmentation is in general not possible in this embodiment. However, in this embodiment, the overhead would be smaller as only the PL header is also used as a preamble and a superframe preamble is not needed. The advantage of using the superframe concept is that more standardized concepts are used, and thus more reuse is possible, despite a higher overhead. The superframe preamble is also larger than the PLH and thus more robust.

As mentioned above, the adversary could have much better channel conditions than the legitimate receiver. Hence, it could be impaired with much less noise. It is essential to the embodiments of the invention however that the adversary cannot average out the noise or needs a very long time to do so (longer than the time that a fixed spreading sequence is used). Hence, the spread waveform really needs to be sent under "a signal that acts like noise". Therefore, it is best that the transmission system adds noise itself on top of the useful spread signal, e.g. with a power spectral density of 10 or 15 dB or 20 dB above the useful signal. Alternatively, it could send the waveform below another carrier. E.g., when the other carrier is a TRANSEC carrier, the adversary can impossibly lock on it or demodulate it. Hence, it cannot subtract that carrier. That carrier thus behaves like noise. This is illustrated in Fig.9. Obviously, the combining with noise or with said other carrier can be done at many locations, either digitally or in the analog domain. Due to the use of DSSS, the legitimate receiver can despread the useful signal such that it can be detected by the legitimate receiver.

To increase the jamming resilience, it is interesting to be able to use the entire available bandwidth to retrieve the signal. On the other hand, larger spreading factor increase the computational complexity of the detection. Instead of spreading it more, it could be desired to be able to retrieve the signal on multiple locations in the spectrum. To avoid patterns in the spectrum because of identical signals, or to avoid possibilities to combine parts of the spectrum to average out noise, the different copies that are sent in other bandwidths could be delayed with respect to each other. Hence, if some of the copies are jammed too much, but others, at least one, not, it still works.

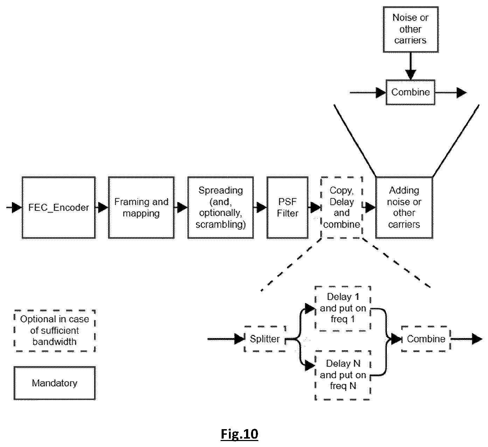

The block diagram in Fig.10 illustrates the invention. The generator means can reside in or communicate with the framing means, or the generator means can be in a superframe placer (possible locations of the superframe placer have been illustrated in Fig.8). The samples obtained from the pulse shape filter can optionally be modulated to multiple frequencies before adding a further signal, such as a noise signal or another carrier.

The focus of the invention is to hide a signal. Therefore, spreading is used and the signal operates at low SNR conditions. As a consequence, the spectral efficiency in general is low and QPSK modulation is sufficient in this type of applications. It is therefore an embodiment of the invention to only use QPSK modulations.

While the invention has been illustrated and described in detail in the drawings and foregoing description, such illustration and description are to be considered illustrative or exemplary and not restrictive. The foregoing description details certain embodiments of the invention. It will be appreciated, however, that no matter how detailed the foregoing appears in text, the invention may be practiced in many ways.

A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A transmission system arranged for generating data traffic to be transmitted to one or more earth station receivers of a satellite communication system, said transmission system comprising :
- encoding and modulation means for encoding and mapping a plurality of baseband frames of information bits belonging to said data traffic, each baseband frame associated with a modulation and coding type, to a plurality of frames of encoded and modulated symbols,
- generator means to generate one or more values to determine a superframe length,
- framing means arranged for inserting synchronization symbols and preambles into frames of said plurality of frames of encoded and modulated symbols, so obtaining a plurality of superframes, each preamble indicating the start of a superframe,
- spreading means arranged to receive said plurality of superframes or a version of said plurality, and to spread each symbol in said plurality of superframes or said version thereof with a spreading sequence to a chip sequence, so obtaining a plurality of spread superframes,
wherein said one or more values generated in said generator means determine for a current superframe a frame length different from the frame length of the preceding superframe.

2. The transmission system as in claim 1, comprising scrambling means and wherein said version of said plurality received by said spreading means comprises scrambled superframes.

3. The transmission system as in claim 1, comprising scrambling means arranged to scramble said plurality of spread superframes.

4. The transmission system as in any of claims 1 to 3, wherein said synchronization symbols comprise pilot symbols and/or physical layer header symbols.

5. The transmission system as in any of the previous claims, wherein said framing means is arranged to convert said plurality of frames of encoded and modulated symbols into a plurality of capacity units, each capacity unit corresponding to a predetermined number of symbols, said framing means further arranged to insert into said plurality of capacity units a preamble and, optionally, superframe pilots and a postamble, per superframe.

6. The transmission system as in claim 5, wherein said generator means are arranged to generate a value representing the number of capacity units in a superframe.

7. The transmission system as in claim 5 or 6, wherein said generator means are arranged to generate a value representing the postamble length.

8. The transmission system as in claim 6 to 7, wherein said number of capacity units in a superframe and/or said postamble length are different than the number or the length for the preceding superframe.

9. The transmission system as in any of claims 5 to 8, further arranged to insert at least one dummy frame of type B as defined in DVB-S2X after a last frame of encoded and modulated symbols in a superframe, wherein said generator means are arranged to determine a value representing a length of said dummy frame of type B.

10. The transmission system as in any of the previous claims, further comprising a superframe placer hosting said generator means.

11. The transmission system as in any of the previous claims, comprising baseband shaping and quadrature modulation means arranged for receiving said spread superframe or said scrambled spread superframe and for modulating symbols of said superframe on a waveform at a chip rate, thereby obtaining a signal to be transmitted.

12. The transmission system of claim 11, further arranged to add a further signal to said signal to be transmitted, said further signal occupying at least a same frequency range in the frequency domain as said signal to be transmitted and said further signal having a higher power spectral density than said signal to be transmitted.

13. The transmission system of claim 12, wherein said further signal is a noise signal.

14. The transmission system of claim 12, wherein said further signal is a carrier signal, preferably a Transmission Security, TRANSEC carrier signal.

15. The transmission system as in any of the previous claims, wherein said spreading sequence is reconfigurable.

16. The transmission system of claim 15, wherein said spreading sequence is reconfigured daily or weekly.

17. The transmission system of as in any of the previous claims, wherein said generator means are arranged to generate said one or more values per superframe, said one or values being different from superframe to superframe.

18. The transmission system of as in any of the previous claims, wherein said modulation is a QPSK modulation.

## Patentansprüche

1. Ein Übertragungssystem, das dazu angeordnet ist, Datenverkehr, der an einen oder mehrere Erdfunkstellenempfänger eines Satellitenkommunikationssystems übertragen werden soll, zu erzeugen, wobei das Übertragungssystem Folgendes umfasst:
- Codierungs- und Modulationsmittel zum Codieren und Mapping einer Vielzahl von Basisbandrahmen von Informationsbits, die zu dem Datenverkehr gehören, wobei jeder Basisbandrahmen einem Modulations- und Codierungstyp zugeordnet ist, zu einer Vielzahl von Rahmen codierter und modulierter Symbole,
- Erzeugungsmittel, zum Erzeugen eines oder mehrerer Werte, um eine Überrahmen-Länge zu bestimmen.
- Rahmungsmittel, die dazu angeordnet sind, Synchronisationssymbole und Präambeln in Rahmen der Vielzahl von Rahmen codierter und modulierter Symbole einzufügen, um dadurch eine Vielzahl von Überrahmen zu erhalten, wobei jede Präambel den Beginn eines Überrahmens angibt,
- Spreizungsmittel, die dazu angeordnet sind, die Vielzahl von Überrahmen oder eine Version der Vielzahl zu empfangen und jedes Symbol in der Vielzahl von dazu angeordnet oder der Version davon mit einer Spreizsequenz zu einer Chipsequenz zu spreizen, um dadurch eine Vielzahl gespreizter Überrahmen zu erhalten,
wobei die eine oder mehreren in den Erzeugungsmitteln erzeugte Werte für einen aktuellen Überrahmen eine Rahmenlänge bestimmen, die sich von der Rahmenlänge des vorhergehenden Überrahmens unterscheidet.

2. Das Übertragungssystem nach Anspruch 1, das Verschlüsselungsmittel umfasst, und wobei die Version der Vielzahl, die von den Spreizmitteln empfangen wird, verschlüsselte Überrahmen umfasst.

3. Das Übertragungssystem nach Anspruch 1, das Verschlüsselungsmittel umfasst, die dazu angeordnet sind, die Vielzahl gespreizter Überrahmen zu verschlüsseln.

4. Das Übertragungssystem nach einem der Ansprüche 1 bis 3, wobei die Synchronisationssymbole Pilotsymbole und/oder Physical-Layer-Header-Symbole umfassen.

5. Das Übertragungssystem nach einem der vorherigen Ansprüche, wobei die Rahmungsmittel dazu angeordnet sind, die Vielzahl von Rahmen aus codierten und modulierten Symbolen in eine Vielzahl von Kapazitätseinheiten umzuwandeln, wobei jede Kapazitätseinheit einer vorbestimmten Anzahl von Symbolen entspricht, wobei die Rahmungsmittel weiter dazu angeordnet sind, in die Vielzahl von Kapazitätseinheiten pro Überrahmen eine Präambel und optional Überrahmen-Piloten und eine Postambel einzufügen.

6. Das Übertragungssystem nach Anspruch 5, wobei die Erzeugungsmittel dazu angeordnet sind, einen Wert zu erzeugen, der die Anzahl der Kapazitätseinheiten in einem Überrahmen darstellt.

7. Das Übertragungssystem nach Anspruch 5 oder 6, wobei die Erzeugungsmittel dazu angeordnet sind, einen Wert zu erzeugen, der die Postambel-Länge darstellt.

8. Das Übertragungssystem nach Anspruch 6 bis 7, wobei sich die Anzahl von Kapazitätseinheiten in einem Überrahmen und/oder die Postambel-Länge von der Anzahl oder der Länge des vorhergehenden Überrahmens unterscheiden.

9. Das Übertragungssystem nach einem der Ansprüche 5 bis 8, das weiter dazu angeordnet ist, mindestens einen Dummy-Rahmen vom Typ B, wie in DVB-S2X definiert, nach einem letzten Rahmen aus codierten und modulierten Symbolen in einem Überrahmen einzufügen, wobei die Erzeugungsmittel dazu angeordnet sind, einen Wert zu bestimmen, der eine Länge des Dummy-Rahmens vom Typ B darstellt.

10. Das Übertragungssystem nach einem der vorherigen Ansprüche, das weiter einen Überrahmenplatzierer, der die Erzeugungsmittel hostet, umfasst.

11. Das Übertragungssystem nach einem der vorherigen Ansprüche, das Formgebungs- und - Quadraturmodulationsmittel des Basisbands umfasst, die dazu angeordnet sind, den gespreizten Überrahmen oder den verschlüsselten gespreizten Überrahmen zu empfangen und Symbole des Überrahmens auf eine Wellenform bei einer Chiprate zu modulieren, um dadurch das Signal zu erhalten, das übertragen werden soll.

12. Das Übertragungssystem nach Anspruch 11, das weiter dazu angeordnet ist, ein weiteres Signal zu dem zu übertragenden Signal hinzuzufügen, wobei das weitere Signal mindestens denselben Frequenzbereich in der Frequenzdomäne einnimmt wie das zu übertragende Signal, und das weitere Signal eine höhere spektrale Leistungsdichte als das zu übertragende Signal aufweist.

13. Das Übertragungssystem nach Anspruch 12, wobei es sich bei dem weiteren Signal um ein Rauschsignal handelt.

14. Das Übertragungssystem nach Anspruch 12, wobei es sich bei dem weiteren Signal um ein Trägersignal, bevorzugt ein Transmission-Security-Trägersignal, TRANSEC-Trägersignal, handelt.

15. Das Übertragungssystem nach einem der vorherigen Ansprüche, wobei die Spreizsequenz neu konfigurierbar ist.

16. Das Übertragungssystem nach Anspruch 15, wobei die Spreizsequenz täglich oder wöchentlich neu konfiguriert wird.

17. Das Übertragungssystem nach einem der vorherigen Ansprüche, wobei die Erzeugungsmittel dazu angeordnet ist, pro Überrahmen einen oder mehrere Werte zu erzeugen, wobei sich der eine oder die Werte von Überrahmen zu Überrahmen unterscheiden.

18. Das Übertragungssystem nach einem der vorherigen Ansprüche, wobei die Modulation eine QPSK-Modulation ist.

## Revendications

1. Un système de transmission conçu pour générer un trafic de données à transmettre à un ou plusieurs récepteurs de stations terrestres d'un système de communication par satellite, ledit système de transmission comprenant :
- des moyens de codage et de modulation pour encoder et mapper une pluralité de trames de bande de base de bits d'information appartenant audit trafic de données, chaque trame de bande de base étant associée à un type de modulation et de codage, à une pluralité de trames de symboles encodés et modulés,
- des moyens de génération pour générer une ou plusieurs valeurs afin de déterminer une longueur de supertrame,
- des moyens de tramage conçus pour insérer des symboles de synchronisation et des préambules dans des trames de ladite pluralité de trames de symboles encodés et modulés, obtenant ainsi une pluralité de supertrames, chaque préambule indiquant le début d'une supertrame,
- des moyens d'étalement conçus pour recevoir ladite pluralité de supertrames ou une version de ladite pluralité, et pour étaler chaque symbole dans ladite pluralité de supertrames ou ladite version de celles-ci avec une séquence d'étalement en une séquence de puces, obtenant ainsi une pluralité de supertrames étalées,
dans lequel ladite ou lesdites valeurs générées dans lesdits moyens de génération déterminent pour une supertrame actuelle une longueur de trame différente de la longueur de trame de la supertrame précédente.

2. Le système de transmission selon la revendication 1, comprenant des moyens de brouillage et dans lequel ladite version de ladite pluralité reçue par lesdits moyens d'étalement comprend des supertrames brouillées.

3. Le système de transmission selon la revendication 1, comprenant des moyens de brouillage conçus pour brouiller ladite pluralité de supertrames étalées.

4. Le système de transmission selon l'une quelconque des revendications 1 à 3, dans lequel lesdits symboles de synchronisation comprennent des symboles pilotes et/ou des symboles d'en-tête de couche physique.

5. Le système de transmission selon l'une quelconque des revendications précédentes, dans lequel lesdits moyens de tramage sont conçus pour convertir ladite pluralité de trames de symboles encodés et modulés en une pluralité d'unités de capacité, chaque unité de capacité correspondant à un nombre prédéterminé de symboles, lesdits moyens de tramage étant en outre conçus pour insérer dans ladite pluralité d'unités de capacité un préambule et, éventuellement, des pilotes de supertrame et un postambule, par supertrame.

6. Le système de transmission selon la revendication 5, dans lequel lesdits moyens de génération sont conçus pour générer une valeur représentant le nombre d'unités de capacité dans une supertrame.

7. Le système de transmission selon la revendication 5 ou 6, dans lequel lesdits moyens de génération sont conçus pour générer une valeur représentant la longueur du postambule.

8. Le système de transmission selon les revendications 6 à 7, dans lequel ledit nombre d'unités de capacité dans une supertrame et/ou ladite longueur du postambule sont différents du nombre ou de la longueur pour la supertrame précédente.

9. Le système de transmission selon l'une quelconque des revendications 5 à 8, conçu en outre pour insérer au moins une trame factice de type B telle que définie dans DVB-S2X après une dernière trame de symboles encodés et modulés dans une supertrame, dans lequel lesdits moyens de génération sont conçus pour déterminer une valeur représentant une longueur de ladite trame factice de type B.

10. Le système de transmission selon l'une quelconque des revendications précédentes, comprenant en outre un placeur de supertrame hébergeant lesdits moyens de génération.

11. Le système de transmission selon l'une quelconque des revendications précédentes, comprenant des moyens de façonnage de bande de base et de modulation en quadrature conçus pour recevoir ladite supertrame étalée ou ladite supertrame étalée brouillée et pour moduler des symboles de ladite supertrame sur une forme d'onde à un débit de puces, obtenant ainsi un signal à transmettre.

12. Le système de transmission selon la revendication 11, conçu en outre pour ajouter un signal supplémentaire audit signal à transmettre, ledit signal supplémentaire occupant au moins une même plage de fréquences dans le domaine fréquentiel que ledit signal à transmettre et ledit signal supplémentaire ayant une densité spectrale de puissance plus élevée que ledit signal à transmettre.

13. Le système de transmission selon la revendication 12, dans lequel ledit signal supplémentaire est un signal de bruit.

14. Le système de transmission selon la revendication 12, dans lequel ledit signal supplémentaire est un signal porteur, de préférence un signal porteur de sécurité de transmission, TRANSEC.

15. Le système de transmission selon l'une quelconque des revendications précédentes, dans lequel ladite séquence d'étalement est reconfigurable.

16. Le système de transmission selon la revendication 15, dans lequel ladite séquence d'étalement est reconfigurée quotidiennement ou hebdomadairement.

17. Le système de transmission selon l'une quelconque des revendications précédentes, dans lequel lesdits moyens de génération sont conçus pour générer ladite ou lesdites valeurs par supertrame, ladite ou lesdites valeurs étant différentes d'une supertrame à l'autre.

18. Le système de transmission selon l'une quelconque des revendications précédentes, dans lequel ladite modulation est une modulation QPSK.
